Europäisches Patentamt

European Patent Office

Office européen des brevets

(11) Veröffentlichungsnummer: **0 036 664**
**B1**

(12) **EUROPÄISCHE PATENTSCHRIFT**

(19)

(51) Int. Cl.³: **C 02 F 11/00**

(45) Veröffentlichungstag der Patentschrift:
09.02.83

(21) Anmeldenummer: 81102205.2

(22) Anmeldetag: 24.03.81

(54) Räumvorrichtung für Absetzbecken, Schlammfänge od. dgl.

(30) Priorität: 26.03.80 DE 3011752

(43) Veröffentlichungstag der Anmeldung:
30.09.81 Patentblatt 81/39

(45) Bekanntmachung des Hinweises auf die Patenterteilung:
09.02.83 Patentblatt 83/6

(84) Benannte Vertragsstaaten:
AT BE CH DE FR IT LI LU NL

(56) Entgegenhaltungen:
AT-B-277 093
DE-B-2 343 182

(73) Patentinhaber: Passavant-Werke AG & Co. KG,
D-6209 Aarbergen 7 (DE)

(72) Erfinder: Smigerski, Rudolf, Humboldstrasse 9,
D-6209 Aarbergen 2 (DE)
Erfinder: Dörner, Rosemarie, Remmbachstrasse 1,
D-6209 Heidenrod 2 (DE)
Erfinder: Schmidt, Peter, Festerbachstrasse 21,
D-6209 Hohenstein-Holzhausen (DE)

(74) Vertreter: Glawe, Delfs, Moll & Partner Patentanwälte,
Postfach 26 01 62 Liebherrstrasse 20,
D-8000 München 26 (DE)

Räumvorrichtung für Absetzbecken, Schlammfänge od. dgl.

Die Erfindung betrifft eine Räumvorrichtung für Absetzbecken, Schlammfänge od. dgl., mit einer über dem Becken verfahrbaren Brücke, einem daran mittels Schwenkarm hochschwenkbar gelagerten Räumschild und einer Belastungsvorrichtung, die eine den Räumschild in die Räumstellung belastende Rückstellkraft erzeugt.

Eine Räumvorrichtung dieser Art ist z. B. aus der DE-C-1 179 160 bekannt. Bei diesem Räumer verläuft der Schwenkarm lotrecht. Dies ist vor allem bei Längsräumern deshalb vorteilhaft, weil der Räumschild dann tatsächlich bis an das Beckenende gefahren werden kann, was bei von der Brücke unter einem Winkel nachgeschleppten Räumschilden nicht möglich ist. In dieser lotrechten Stellung ist aber das durch das Eigengewicht des Räumschildes erzeugte Rückstellmoment praktisch Null, so daß der Räumschild keine ausreichende Räumkraft ausübt und bereits bei kleinem Räumwiderstand nach hinten ausweichen würde. Aus diesem Grunde ist die Belastungsvorrichtung vorgesehen, die für die Ausübung einer ausreichend großen Rückstell- und damit Räumkraft auch in der lotrechten Stellung des Räumschildes sorgt. Bei der bekannten Vorrichtung besteht die Belastungsvorrichtung aus einem an der Brücke an einem Hebelarm schwenkarm gelagerten Belastungsgewicht, das mit dem Schwenkarm des Räumschildes über einen Kniehebel verbunden ist, der beim Hochschwenken des Räumschildes geknickt und beim Absenken des Räumschildes gespreizt wird. Dies hat den Vorteil, daß beim Hochschwenken des Räumschildes der Hubweg des Belastungsgewichtes wesentlich kleiner als der des Räumschildes ist.

Nachteilig bei der bekannten Vorrichtung ist jedoch, daß die von der Belastungsvorrichtung ausgeübte Rückstellkraft bereits bei Beginn der Schwenkbewegung des Räumschildes sehr stark abnimmt. Wenn der Räumschild z. B. durch eine starke und verfestigte Schlammansammlung zum Ausweichen aus der lotrechten Lage entgegen der maximalen Rückstellkraft der Belastungsvorrichtung gezwungen wird, dann nimmt die Rückstellkraft der Belastungsvorrichtung rasch so weit ab, daß der Räumschild nicht in der Lage ist, wenigstens die obere Schicht der Schlammansammlung abzuräumen. Dies, obwohl Schwenkarm und Räumschild beim Ausweichen durch ihr dann an einem Hebelarm wirkendes Eigengewicht eine Rückstellkraft erzeugen, die aber die Abnahme der Rückstellkraft der Belastungsvorrichtung bei weitem nicht ausgleicht.

Der Erfindung liegt die Aufgabe zugrunde, ein Räumvorrichtung von kompakter, auch in beengten Platzverhältnissen einsetzbarer Bauart zu schaffen, die vor allem für das schichtweise Abräumen von Schammansammlungen geeignet ist.

Zur Lösung der Aufgabe ist eine Räumvorrichtung der eingangs genannten Art erfindungsgemäß dadurch gekennzeichnet, daß die Belastungsvorrichtung eine beim Hochschwenken des Räumschildes zunächst zunehmende Rückstellkraft erzeugt.

Hierdurch wird der Vorteil erzielt, daß der Räumschild beim Auftreffen auf eine starke und/oder verfestigte Schlammansammlung zwar zunächst eine Ausweichschwenkbewegung durchführt, aber nur solange, bis die hierbei zunehmende Rückstellkraft der Belastungsvorrichtung so groß geworden ist, daß der Räumschild in der Lage ist, in der Ausweichschwenkstellung wenigstens eine obere Schicht der Schlammansammlung ausreichender Stärke abzuräumen. Bei wiederholtem Überfahren der Schlammansammlung kann dann der gesamte Schlamm geräumt werden. Bei einem über derartige Ausweichbewegungen hinausgehenden Schwenkweg kann dann die Rückstellkraft gleich bleiben oder aber vorzugsweise wieder abnehmen, um den Hochschwenkantrieb zu entlasten.

Vorzugsweise ist die Belastungsvorrichtung so ausgebildet, daß ihre Rückstellkraft über einen anfänglichen Schwenkweg des Räumschildes, der erfindungsgemäß 20 bis 45°, vorzugsweise ca. 30° beträgt, zunimmt und dann abnimmt.

Die konstruktive Realisierung einer Belastungsvorrichtung mit der gewünschten Rückstellcharakteristik kann auf verschiedene Weise erfolgen. Erfindungsgemäß bevorzugt wird bei einem Räumer, bei dem die Belastungsvorrichtung aus einem an der Brücke mittels Hebelarm schwenkbar gelagerten Belastungsgewicht besteht, daß dieser Hebelarm mit dem Schwenkarm des Räumschildes starr verbunden und das Belastungsgewicht bei in Räumstellung befindlichem Räumschild tiefer als die Schwenkachse des Räumschildes angeordnet ist. Beim Ausweichen des Räumschildes nimmt daher der für das vom Gewicht ausgeübte Rückstellmoment maßgebliche Hebelarm in bezug auf die Schwenkachse zunächst zu, und zwar so lange, bis sich der Schwerpunkt des Belastungsgewichtes auf gleicher Höhe wie die Schwenkachse befindet, und erst dann wieder ab.

Gemäß einer weiteren bevorzugten Ausgestaltung der Erfindung hat der Schwenkarm des Räumschildes in seinem oberen Bereich einen in Räumfahrtrichtung der Brücke nach vorne ausgewinkelten Verlauf. Hierdurch ist ein völliges Hochschwenken des Räumschildes bis in eine Lage oberhalb der Beckenkrone möglich, ohne daß der Schwenkarm an der Brücke anschlägt. Das Belastungsgewicht und die Länge des ihn mit dem Schwenkarm verbindenden Hebelarms sind vorzugsweise so ausgestaltet, daß das Belastungsgewicht sich auch in der hochgeschwenkten Lage innerhalb der Umrisse der Brücke befindet.

Eine Ausführungsform der Erfindung wird anhand der Zeichnungen näher erläutert.

Fig. 1 und 2 zeigen schematisch in Seitenansicht bzw. in Vorderansicht eine erfindungsgemäß ausgebildete Räumvorrichtung für die Schlammrinne eines Sandfangs.

Fig. 3 zeigt eine andere erfindungsgemäß ausgebildete Räumvorrichtung mit Federbelastungsvorrichtung in schematischer Darstellung in der Seitenansicht.

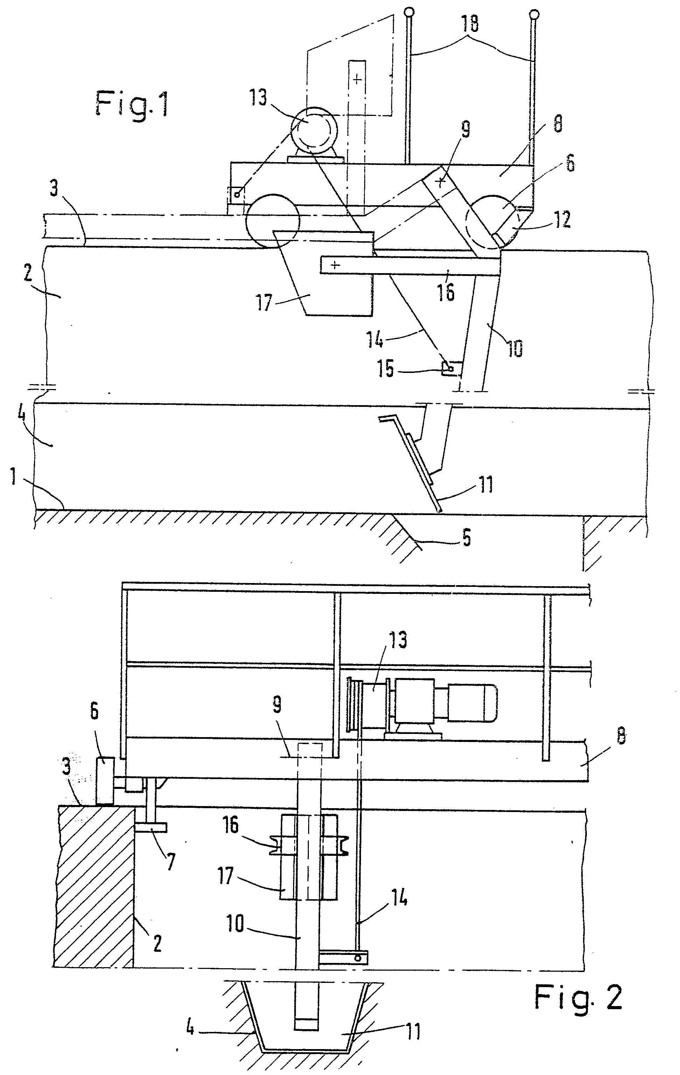

In den Zeichnungen ist ein Sandfangbecken angedeutet mit einer Beckensohle 1, einer Seitenwand 2 mit Beckenkrone 3, und einer Schlammrinne 4, die in einen Schlammtrichter 5 ausmündet. Auf der Beckenkrone 3 ist mittels Laufrädern 6 und Seitenführungsrollen 7 eine Brücke 8 verfahrbar. An der Brücke ist an einer horizontalen Schwenkachse 9 ein Schwenkarm 10 schwenkbar gelagert, der an seinem unteren Ende den trapezförmigen Räumschild 11 trägt. In der abgesenkten Stellung, d. h. der Räumstellung, befindet sich die Vorderkante des Räumschildes 11 ziemlich genau lotrecht unter der Schwenkachse 9. Diese Räumstellung ist festgelegt durch einen an der Brücke 8 vorgesehenen Anschlag 12, an welchem der Räumarm 10 anliegt. Der in Räumstellung befindliche Räumschild 11 räumt, während der in Fig. 1 von links nach rechts gerichteten Räumfahrt der Brücke 8, den Schlamm aus der Rinne 4 in den Schlammtrichter 5.

Zum Hochschwenken des Schwenkarmes 10 mit dem Räumschild 11 dient eine Seilwinde 13 mit einem Hubseil 14, das bei 15 an dem Schwenkarm 10 verankert ist. Durch Betätigung des Motors der Seilwinde kann der Räumschild 11 hochgeschwenkt werden bis in eine Position, die über der Beckenkrone 3 liegt, so daß der Räumschild für Inspektion und Wartung frei zugänglich ist. Der Schwenkarm 10 hat, wie aus Fig. 1 ersichtlich, eine in Vorwärtsfahrtrichtung der Brücke 8 ausgekröpfte oder ausgewinkelte Form. Diese Winkelform macht es möglich, den Räumschild 1 bis über die Beckenkrone 3 hochzuschwenken, ohne daß der obere Teil des Schwenkarmes 10 mit Teilen der Brücke 8 in Berührung kommt, wie dies bei geradlinigem Verlauf des Schwenkarmes 10 der Fall wäre.

Mit dem Schwenkarm 10 starr verbunden sind zwei parallele Tragarme 16, die an ihrem Ende ein Belastungsgewicht 17 tragen, das z. B. aus mehreren Scheiben zusammengesetzt ist, so daß die Größe des Gewichtes durch Verändern der Anzahl der Scheiben verändert werden kann. Die Länge des Tragarms 16 ist so bemessen, daß der Abstand des Schwerpunktes des Belastungsgewichtes 17 von der Schwenkachse 9 ausreichend ist, um ein den Räumschild 11 in seine Räumstellung drückendes Drehmoment von genügender Größe zu erzeugen, so daß der Räumschild 11 in der Räumstellung die nötige Räumkraft aufbringen kann.

Der Schwerpunkt des Belastungsgewichtes 17 liegt unter der durch die Schwenkachse 9 verlaufenden horizontalen Ebene. Wenn der Räumschild 11 auf eine größere Schlammansammlung trifft und dieser durch Schwenken im Uhrzeigersinn ausweicht, nimmt auch der Abstand des Schwerpunktes des Belastungsgewichtes 17 von der durch die Schwenkachse 9 verlaufenden vertikalen Ebene zu, so daß auch das den Räumschild 11 belastende Drehmoment zunimmt. Parallel hierzu nimmt auch der Hebelarm des Schwerpunktes von Schwenkarm und Räumschild zu. Die Anordnung ist vorzugsweise so getroffen, daß der Schwerpunkt des Belastungsgewichtes 17 sich auf gleicher Höhe wie die Schwenkachse 9 befindet, wenn der Schwenkarm 10 mit dem Räumschild 11 aus der Räumstellung um circa 30° verschwenkt worden ist. Die Räumkraft nimmt daher während der ersten 30° der Schwenkbewegung des Räumschildes 11 zu und erst dann wieder ab. Der Räumschild 11 ist daher in der Lage, auch bei Schlammansammlungen, für deren Durchbringung die vom Belastungsgewicht 17 in der Räumstellung erzeugte Belastungskraft nicht ausreicht, wenigstens die obere Schicht dieser Schlammansammlung mit einer entsprechend dem Verschwenken des Belastungsgewichtes 17 vergrößerten Räumkraft abzuräumen.

Nach Durchlaufen der ersten 25 oder 30° des Schwenkweges nimmt der Abstand des Schwerpunktes des Belastungsgewichtes 17 von der Vertikalebene durch die Schwenkachse 9 trotz des zunächst noch wachsenden Hebelarms des Schwenkarmschwerpunktes wieder stark ab, so daß sich entsprechend auch die für das weitere Hochschwenken des Räumschildes erforderliche, von der Seilwinde aufzubringende Kraft verringert.

Wie man aus Fig. 1 ersieht, ist die Anordnung des Belastungsgewichtes 17 und die Länge seines Tragarmes 16 so abgestimmt, daß das Belastungsgewicht in der (strichpunktiert gezeichneten) hochgeschwenkten Lage sich noch völlig innerhalb der Umrisse der Brücke 8 und des auf ihr angeordneten Geländers 18 befindet. Besondere Schutzgitter oder Abdeckungen für das Belastungsgewicht 17 in der hochgeschwenkten Lage sind daher nicht erforderlich, wie dies der Fall wäre, wenn das Belastungsgewicht über das Brückenfahrwerk oder das Geländer hinausragen würde.

Abänderungen der dargestellten Ausführungsform sind im Rahmen der Erfindung möglich. Beispielsweise muß zur Befestigung des Belastungsgewichtes nicht unbedingt ein Tragarm 16 vorgesehen sein. Der Schwenkarm 10 des Räumschildes kann vielmehr selbst derart abgekröpft oder abgewinkelt sein, daß er einen in genügendem Abstand hinter der durch die Schwenkachse 9 gelegten Vertikalebene liegenden Teil aufweist, an dem das Belastungsgewicht 17 unmittelbar befestigt werden kann. Man kann auch einen gewinkelten einstückigen Arm verwenden, an dem einerseits der Räumschild und andererseits das Belastungsgewicht befestigt sind, und der durch einen davon abstehenden Tragarm mit der Schwenkachse 9 verbunden ist.

Die Erfindung läßt sich mit denselben Vorteilen auch bei Räumern anwenden, deren Schwenkarm unter einem mehr oder weniger großen Winkel nachgeschleppt wird.

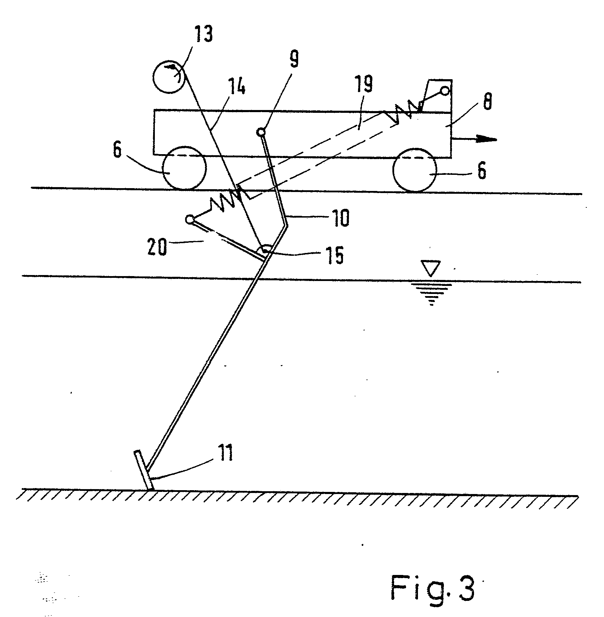

Eine andere Ausführungsform der Räumervorrichtung ist aus der Fig. 3 ersichtlich, bei der der Schwenkarm 10 statt mit einem Belastungsgewicht mit einer Federbelastungseinrichtung versehen ist. Hierzu ist am Schwenkarm 10, beispielsweise im Punkt 15 ein Arm 20 starr befestigt, an dessen Ende eine, an der Brücke 8 eingehängte Zugfeder 19 eingehängt ist. Dreht sich der Schwenkarm 10 in der Zeichnung im Uhrzeigersinn um seine Schwenkachse 9, so nimmt die Länge der Zugfeder 19 zunächst zu, bis ihre Längsachse durch die Schwenkachse 9 schneidet, und dann wieder ab. Auch bei dieser Ausführungsform ist also die Rückstellcharakteristik derart, daß das auf den Räumschild 11 wirkende Belastungsmoment bis zu dem maximalen Ausweichwinkel zu- und dann wieder abnimmt. Beim Hochschwenken des Schwenkarmes 10 verschwindet sogar die Belastungskraft oberhalb der Federstrecklage und schlägt in eine gewichtsmindernde Kraft um, wobei lediglich zu beachten ist, daß die maximale Federkraft das im Totpunkt wirksame Schwenkgewicht nicht ganz erreichen darf, da sonst der Schwenkarm 10 nicht selbsttätig mit Hilfe des Seiles 14 abgesenkt werden kann.

## Patentansprüche

1. Räumvorrichtung für Absetzbecken, Schlammfänge od. dgl., mit einer über dem Becken verfahrbaren Brücke, einem daran mittels Schwenkarm hochschwenkbar gelagerten Räumschild und einer Belastungsvorrichtung, die eine den Räumschild in die Räumstellung belastende Rückstellkraft erzeugt, dadurch gekennzeichnet, daß die Belastungsvorrichtung (16, 17) eine beim Hochschwenken des Räumschildes (11) zunächst zunehmende Rückstellkraft erzeugt.

2. Räumvorrichtung nach Anspruch 1, dadurch gekennzeichnet, daß die Belastungsvorrichtung (16, 17) so ausgebildet ist, daß ihre Rückstellkraft über einen anfänglichen Schwenkweg des Räumschildes (11), der 20 bis 45°, vorzugsweise circa 30° beträgt, zunimmt und dann abnimmt.

3. Räumvorrichtung nach Anspruch 1 oder 2, wobei die Belastungsvorrichtung aus einem an der Brücke mittels Hebelarm schwenkbar gelagerten Belastungsgewicht besteht, dadurch gekennzeichnet, daß der Hebelarm (16) mit dem Schwenkarm (10) des Räumschildes (11) starr verbunden und das Belastungsgewicht (17) bei in Räumstellung befindlichem Räumschild (11) tiefer als die Schwenkachse (9) des Schwenkarms (10) angeordnet ist.

4. Räumvorrichtung nach einem der Ansprüche 1 bis 3, dadurch gekennzeichnet, daß der Schwenkarm (10) des Räumschildes (11) einen in Räumfahrtrichtung der Brücke (8) nach vorne ausgewinkelten Verlauf hat.

5. Räumvorrichtung nach einem der Ansprüche 1 bis 4, dadurch gekennzeichnet, daß die Schwenkachse (9) oberhalb des Flüssigkeitsspiegels und insbesondere oberhalb der Beckenkrone (3) liegt.

6. Räumvorrichtung nach Anspruch 5, dadurch gekennzeichnet, daß Schwenkarm (10) mit Räumschild (11) und Belastungsgewicht (17) derart ausgebildet ist, daß er in der hochgeschwenkten Lage komplett über der Beckenkrone (3) liegt.

7. Räumvorrichtung nach Anspruch 3, dadurch gekennzeichnet, daß das Belastungsgewicht (17) auch in seiner tiefsten Stellung zur Gänze oberhalb des Flüssigkeitsspiegels liegt.

## Claims

1. Clearing device for settling tanks, sludge traps or the like, having a bridge which can travel over the tank, having a clearing plate mounted thereon so that it can be swung up by means of a swinging arm and having a loading device which applies a restoring force loading the clearing plate into the clearing position, characterised in that the loading device (16, 17) applies a restoring force which initially increases upon swinging up of the clearing plate (11).

2. Clearing device according to Claim 1, characterised in that the loading device (16, 17) is so designed that its restoring force increases and then decreses over an initial swinging movement of the clearing plate (11), which amounts to 20 to 45°, preferably about 30°.

3. Clearing device according to Claim 1 or 2, wherein the loading device comprises a loading weight pivotally mounted on the bridge by means of a lever arm, characterised in that the lever arm (16) is rigidly connected to the swinging arm (10) of the clearing plate (11) and when the clearing plate (11) is situated in the clearing position the loading weight (17) is arranged to be lower than the pivot axis (9) of the swinging arm (10).

4. Clearing device according to one of Claims 1 to 3, characterised in that the swinging arm (10) of the clearing plate (11) is cranked forwardly in the direction of clearing travel of the bridge (8).

5. Clearing device according to one of Claims 1 to 4, characterised in that the pivot axis (9) lies above the level of the liquid and, in particular, above the tank top (3).

6. Clearing device according to Claim 5, characterised in that the swinging arm (10) with clearing plate (11) and loading weight (17) is so designed that in the swung-up position it lies completely above the tank top (3).

7. Clearing device according to Claim 3, characterised in that the loading weight (17) lies wholly above the liquid level, even in its lowermost position.

## Revendications

1. Un dispositif de curage pour bassins sédimentaires, bassins de séparation des boues ou similaires, avec un pont mobile au-dessus du bassin, un panneau de curage monté de manière à pouvoir pivoter vers le haut au moyen d'un bras de rotation sur ce pont et un dispositif de charge qui produit une force de rappel sollicitant le panneau de curage vers sa position de curage, caractérisé en ce que le dispositif de charge (16, 17) produit une force de rappel qui est tout d'abord croissante lorsque le panneau de curage (11) pivote vers le haut.

2. Dispositif de curage selon la revendication 1, caractérisé en ce que le dispositif de charge (16, 17) est réalisé de telle manière que sa force de rappel augmente sur une partie initiale de la course de pivotement du panneau de curage (11), comprise entre 20 et 45° et s'élevant de préférence à 30° environ, puis qu'elle diminue.

3. Dispositif de curage selon la revendication 1 ou 2, le dispositif de charge consistant en un poids de charge monté pivotant sur le pont au moyen d'un bras de levier, caractérisé en ce que le bras de levier (16) est raccordé rigidement au bras de rotation (10) du panneau de curage (11) et en ce que le poids de charge (17) est situé plus bas que l'axe de rotation (9) du bras de rotation (10) lorsque le panneau de curage (11) se trouve en position de curage.

4. Dispositif de curage selon l'une quelconque des revendications 1 à 3, caractérisé en ce que le bras de rotation (10) du panneau de curage (11) présente une partie coudée vers l'avant dans la direction de marche avant du pont (8).

5. Dispositif de curage selon l'une quelconque des revendications 1 à 4, caractérisé en ce que l'axe de rotation (9) se trouve au-dessus du niveau du liquide et en particulier au-dessus du couronnement de bassin (3).

6. Dispositif de curage selon la revendication 5, caractérisé en ce que le bras de rotation (10) avec le panneau de curage (11) et le poids de charge (17) sont réalisés de telle manière qu'en position basculée vers le haut, il se trouve complètement au-dessus du couronnement de bassin (3).

7. Dispositif de curage selon la revendication 3, caractérisé en ce que même dans sa position la plus basse, le poids de charge (17) se trouve en totalité au-dessus du niveau de liquide.

Fig. 1

Fig. 2

Fig. 3